# EUROPÄISCHE PATENTSCHRIFT

(11) **EP 2 007 608 B1**
(45) Veröffentlichungstag und Bekanntmachung des Hinweises auf die Patenterteilung: **03.06.2009**
(21) Anmeldenummer: 07722836.9
(22) Anmeldetag: 15.02.2007
(51) Int. Cl.: B60R 22/00

(54) **HALTEVORRICHTUNGEN FÜR ABGELEGTE KOPF-SICHERHEITSGURTE IN VEHIKELN**
HOLDING DEVICES FOR REMOVED HEAD SAFETY BELTS IN VEHICLES
DISPOSITIFS DE FIXATION POUR CEINTURES DE SÉCURITÉ DE TÊTE EN CAS DE NON UTILISATION, DANS DES VÉHICULES

(30) Priorität: 16.04.2006 DE 102006019525
(43) Veröffentlichungstag der Anmeldung: 31.12.2008
(73) Patentinhaber: SCHMÜCKER, Heinrich Hartmut, D-89081 Ulm (DE)
(72) Erfinder: SCHMÜCKER, Heinrich Hartmut, D-89081 Ulm (DE)
(86) Internationale Anmeldenummer: PCT/EP2007/001340
(87) Internationale Veröffentlichungsnummer: WO 2007/118541

(56) Entgegenhaltungen:
- DE-U1-4202005 014 87
- FR-A- 2 720 988

## Beschreibung

Jeder Autofahrer oder Insasse ist heutzutage gewohnt, vor Beginn der Fahrt einen Sicherheitsgurt für seinen Körper anzulegen. Der Sicherheitsgurt aber für den Kopf ist heute noch nicht üblich, ist jedoch notwendig, da die bisherigen Lösungen mit Hilfe der Air - Bags nur unbefriedigend sind, insbesondere weil die Fahrzeuge immer schneller werden und Air - Bags nur bis zu einer Aufprallgeschwindigkeit von 50 km / h erfolgreich helfen.

### Problem

Kopf - Sicherheitsgurte in Ergänzung zum Körpergurt müssen so konzipiert sein, dass sie für die benutzende Person leicht zu handhaben sind, um eine hohe Akzeptanz zu erreichen. Hierzu gehört auch, dass der Kopf - Sicherheitsgurt nach Gebrauch unproblematisch abzulegen ist. Im unbenutzten Zustand hat der Kopf - Sicherheitsgurt aber auch so befestigt zu sein, dass kein Verletzungspotential für Insassen bei Bremsmanövern o.ä. ausgeht.

### Stand der Technik

Das gattungsbildende Patent FR 2 721 880 A1 (2) vom 01.07.1994 von Brossard zeigt eine Mulde im oberen Bereich der Rückenlehne eines Fahrzeugsitzes mit einem Rastmechanismus für ein abzulegendes Befestigungsorgan (Schutzhelm) für einen Kopf - Sicherheitsgurt.

### Erfindung

Bei der Lösung gehen die vorliegenden Innovationen davon aus, dass der ca. 2 cm breite Kopf - Sicherheitsgurt in seiner vorderen Stirnhälfte aus einer festen Schienung mit Polsterung zur Stirnhaut hin besteht. Die Stirnhälfte des Kopf-Sicherheitsgurtes ist gewissermaßen ein gepolsterter Bügel.

Als Lösung werden die folgenden drei Haltevorrichtungen zur Arretierung nicht benutzter, abgelegter Kopf - Sicherheitsgurte während der Fahrt in einem Vehikel vorgeschlagen:

### 1. Lösung:

In Vehikeln mit großem Abstand zwischen Kopf des Fahrenden und Fahrzeugdach ist auf das obere Ende der Rückenlehne ein Halterungsgestell draufgebaut. Dieses Gestell hat eine hakenförmige Halterung, an die der feste Stirngurtbügel nach Gebrauch gehängt werden kann. Eine leichte Rückzugskraft des Kopf - Sicherheitsgurtes durch den Gurtaufroller hält den abgelegten Kopfgurt in straffer Haltung auf diesem Haken und fällt so bei Erschütterungen oder Abbremsmanövern des Vehikels nicht herunter, weil das Ende des Hakens nach oben und leicht nach innen gebogen ist.

### 2. Lösung :

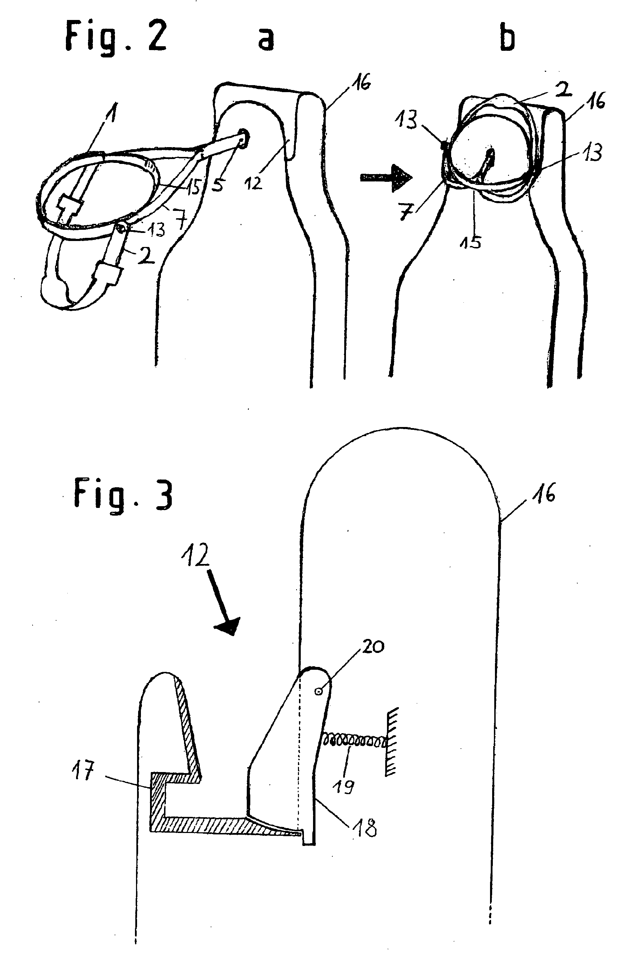

In Vehikeln mit nur geringem Abstand zwischen Kopf des Insassen bzw. Kopfende der Rückenlehne / Kopfstütze und Fahrzeugdach wird eine Ablagemulde im Kopfteil der Rückenlehne bogenförmig vorgesehen. Der Bogen hat den Radius der vorderen, festen Hälfte des Kopf - Sicherheitsgurtes. Am höchsten Punkt dieser bogenförmigen Mulde der Rückenlehne ist eine Einrasterung mit Halteschlitz und federndem Gegendruckhebel angebracht. Dieser federnde Gegendruckhebel sorgt für eine feste Einrasterung des festen Teils des Kopf - Sicherheitsgurtes im gegenüberliegenden Spalt.
Der Gegendruckhebel kann durch eine elastische Feder (wie in Figur 3 dargestellt) oder auch einen elastischen Kunststoffbügel (nicht dargestellt) seinen Druck in Richtung Halteschlitz ausüben.

### 3. Lösung :

Unter den Vehikelbedingungen wie bei Lösung 2 wird in die bogenförmige Mulde der Rückenlehne eine Stufe zur Einrasterung vorgesehen. Der federnde Haltemechanismus wird bei dieser Lösung aber am Vorderteil des festen Kopf - Sicherheitsgurtes angebracht: Eine obere und eine untere Klemmfeder sorgen für die Arretierung in dem vorgesehenen Halteschlitz , der lateral, also außerhalb der Mitte, angebracht ist zu beiden Seiten passend zu den Stellen der Klemmfedern. Zum Herausnehmen des Kopf - Sicherheitsgurtes aus dieser Arretierung muß der Autofahrer mit einer Hand ein Klemmenpaar einer Seite zwischen Daumen und Finger(n) zusammendrücken. Der Kopf - Sicherheitsgurt kann dann nach oben herausgenommen werden.

Die oben genannten drei Ausführungsformen des Gegenstandes der Erfindung sind in der nachfolgenden Beschreibung anhand der in den beigefügten Zeichnungen vereinfacht dargestellten Ausführungsbeispielen erläutert.

Es zeigen:
- Fig. 1 :: 1. Lösung in Seitansicht einer Ablage - Haltevorrichtung mit Halterungsgestell oben auf dem Kopfende einer Rückenlehne; gestrichelte Darstellung : in Funktion am Kopf des Autofahrers, durchgezogene Linien : Ablagestellung in der Haltevorrichtung.
- Fig. 2:: 2. Lösung: Haltevorrichtung integriert in das Kopfende einer Rückenlehne mit federndem Gegendruckhebel in der Ablagemulde zwecks Arretierung:
a) Kopf - Sicherheitsgurt in Benutzung durch einen Insassen während der Fahrt,
b) Kopf - Sicherheitsgurt in unbenutzter Ablageposition in der Haltevorrichtung.
- Fig. 3 :: Querschnitt in der Mitte der Haltevorrichtung von Fig. 2 an höchster Stelle der bogenförmigen Ablagemulde : Ein Gegendruckhebel mit elastischer Federung drängt den einzuschiebenden festen Stirnteil des Kopf - Sicherheitsgurtes in den Halteschlitz.
- Fig. 4 :: 3. Lösung : Haltevorrichtung integriert in das Kopfende einer Rückenlehne: Der federnde Haltemechanismus ist im festen Vorderteil des Kopf-Sicherheitsgurtes eingebaut :
a) Ansicht des Kopf - Sicherheitsgurtes von vorne mit durchscheinend, gestrichelt gezeichnetem Federungsmechanismus sowie durchgehend gezeichneten, außen sichtbaren Klemmenpaaren,
b) Querschnitt des eingerasteten, abgelegten Kopf - Sicherheitsgurtes in Höhe der in Fig. 4 a ) angegebenen Schnittebene.

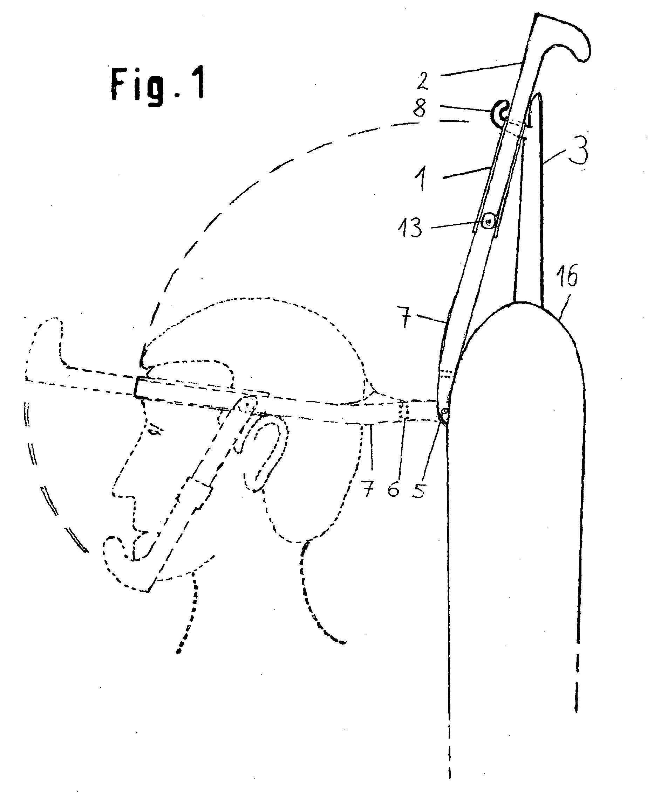

In Figur 1 ist die 1. Lösung einer Haltevorrichtung für einen abgelegten Kopf-Sicherheitsgurt ( 1 ) dargestellt : Ein Halterungsgestell ( 3 ) ist auf das Kopfende der Rückenlehne ( 16 ) eines ( Auto- ) Fahrersitzes gebaut. Am oberen Ende dieses Halterungsgestelles ( 3 ) ist in Fahrtrichtung eine Ablagemulde ( 8 ) mit hakenförmigem Querschnitt zum Aufhängen des Kopf-Sicherheitsgurtes angebracht. Diese Ablagemulde ( 8 ) in geeignetem Abstand läßt den Sicherheitsgurt ( 7 ) durch die Rückzugskraft des Gurtaufrollers fest und sicher aufliegen.
Zum Entnehmen des Kopf-Sicherheitsgurtes zieht der Autofahrer bzw. Insasse den Kopf-Sicherheitsgurt leicht hoch gegen die Rückzugskraft des Gurtaufrollers.

In Figur 2 und Figur 3 ist die 2. Lösung einer Haltevorrichtung für einen abgelegten Kopf-Sicherheitsgurt ( 1 ) dargestellt : Eine Ablagemulde ( 12 ) ist in das Kopfende der Rückenlehne ( 16 ) des Sitzes integriert. Bei hochgeklapptem Kinnbügel ( 2, 13 ) kann der Stirngurt ( 1 ) in die Mulde (12 ) von oben hineingeschoben und arretiert werden. Zur Arretierung wird ein federnder ( 19 ) Gegendruckhebel ( 18 ) zurückgedrängt und gibt Platz frei für den Kopfgurt, der am tiefsten Punkt der Haltevorrichtung in einen Halteschlitz ( 17 ) hineinschrutscht.
Der Kopf-Sicherheitsgurt sitzt in dieser Arretierung fest, weil in dieser Ablagestellung der Hinterkopfgurt ( 15 ) ein Herausschlüpfen aus dem Haltespalt zusätzlich verhindert.
Zum Entnehmen des Kopf-Sicherheitsgurtes drückt der Autofahrer / - insasse den Kopf-Sicherheitsgurt leicht nach hinten gegen den Widerstand des federnden Gegendruckhebels ( 18 ) und entnimmt den Kopf-Sicherheitsgurt (1 ) nach oben aus der Ablagemulde ( 12 ) .

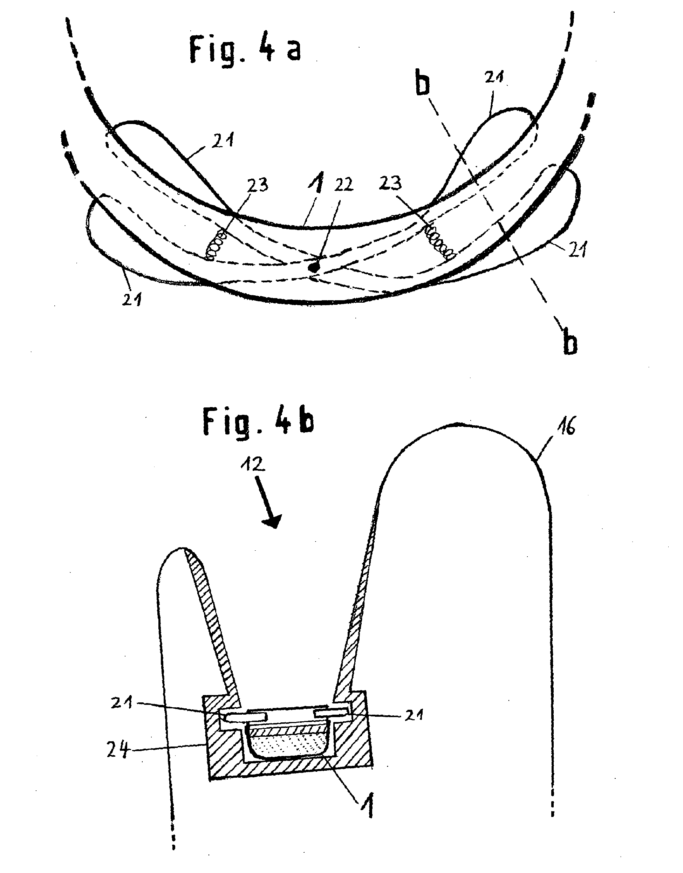

In Figur 4 ist die 3. Lösung einer Haltevorrichtung für einen abgelegten Kopf-Sicherheitsgurt ( 1 ) dargestellt :
Figur 4 a zeigt in schematischer Ansicht von vorne den festen Stimgurt. Vorne an diesen Stirnbügel werden - unter entsprechender Abdeckung versteckt - die Klemmenpaare ( 21 ) , die durch zwei Federn ( 23 ) auseinandergehalten um eine zentrale Achse ( 22 ) zusammenpressbar sind, angebracht. Die über die Oberfläche hervorragenden ( mit durchgezogenen Linien in Fig. 4 a dargestellten ) Anteile der Klemmenpaare ( 21 ) sind für die Einrasterung in die Ablagemulde ( 12 ) gemäß Fig. 4b zuständig : In Fig. 4b ist im Querschnitt in Höhe eines Klemmenpaares ( 21 ) ( b - - - - - b in Fig. 4a angegeben ) ein in einen passenden Halteschlitzbereich ( 24 ) eingelegter Kopf-Sicherheitsgurt ( 1 ) mit seinen Schichten der Polsterung, des Metall- oder Kunststoffbügels, des Gurtbandes und den Klemmenpaaren als Vorderstes ( = Oberstes in Fig. 4b ) abgebildet.
Zur Entnahme des Kopf-Sicherheitsgurtes aus dieser Halterung drückt die Person am Kopf-Sicherheitsgurt nur eines der beiden Klemmnenpaare zwischen Daumen und Finger(n) zusammen und kann den freigegebenen Kopf-Sicherheitsgurt nach oben entnehmen.

### Bezugszeichenliste

- 1: Kopf-Sicherheitsgurt : fester, hautseitig gepolsterter Stirnbügel
- 2: Kinnbügel, klappbar
- 3: Halterungsgestell oben auf Rückenlehne ( 1. Lösung )
- 5: Sperre gegen weiteren Gurteinzug
- 6: Nähte am Gurt
- 7: Weicher hinterer Anteil des Kopf-Sicherheitsgurts
- 8: Ablagemulde am Halterungsgestell ( 1. Lösung )

- 12: Integrierte Ablagemulde ( 2. Lösung )
- 13: Arretierungs- und Drehmechanismus für klappbaren Kinnbügel
- 15: Hinterkopf - Klettverschluß für variablen Kopfumfang
- 16: Kopfende der Rückenlehne des ( Auto- ) Sitzes
- 17: Arretierung mit Halteschlitz ( 2. Lösung )
- 18: Gegendruckhebel
- 19: Feder als Gegendruckerzeuger
- 20: Drehachse des Gegendruckhebels

- 21: Klemmenpaare ( 3. Lösung )
- 22: Drehachse der Klemmenpaare
- 23: Feder für Klemmenpaar
- 24: Arretierung im Halteschlitzbereich

## Patentansprüche

1. Haltevorrichtungen für einen abgelegten Kopf-Sicherheitsgurt ( 1 ) eines Fahrzeuginsassen, insbesondere Autofahrers, bei Nichtgebrauch des Kopf-Sicherheitsgurtes während der Fahrt,
**dadurch gekennzeichnet daß**
ein Halterungsgestell ( 3 ) mit im Querschnitt hakenförmig ausgebildeter Auflagefläche ( 8 ) oberhalb des Kopfendes der Rückenlehne ( 16 ) des Sitzes angebracht ist derart , daß die Rückzugskraft des Gurtaufrollers den am Stirnteil aufgehängten Kopf-Sicherheitsgurt ( 1 ) in die hakenförmige Auflagefläche ( 8 ) hineinzieht und für ein Entnehmen aus der Halterung aus der Nichtgebrauchsstellung nur eine leichte Anhebebewegung des Kopf-Sicherheitsgurtes ( 1 ) gegen die Rückzugskraft des Gurtaufrollers erforderlich ist.

2. Haltevorrichtungen für einen abgelegten Kopf-Sicherheitsgurt ( 1 ) eines Fahrzeuginsassen, insbesondere Autofahrers, bei Nichtgebrauch des Kopf - Sicherheitsgurtes während der Fahrt,
**dadurch gekennzeichnet, daß**
eine in einem oberen Ende der Kopfstütze oder eines Kopfteiles der Rückenlehne ( 16 ) eingelassene Mulde ( 12 ) mit einem Einrasterungsmechanismus angeordnet ist, bestehend aus einem in Fahrtrichtung vorne vorzusehenden eckigen Halteschlitz (17), wobei die Mulde (12 ) aus mehreren einzelnen oder paarweise oder mehrere paarweise angeordneten Halteschlitzen ( 17 ), die gekreuzt oder mehrfach gekreuzt oder gekreuzt paarweise angebracht bestehen, einen oder mehrere jeweils gegenüberliegenden federnden Gegendruckhebel (18) aufweist oder aufweisen und eine Entnahme des Kopf-Sicherheitsgurtes (1) aus der Haltevorrichtung (17) aus der Nichtgebrauchsstellung mittels leichten Drucks am aufgehängten Kopf-Sicherheitsgurt (1) nach hinten oder zur Seite erfolgt.

3. Haltevorrichtungen für einen abgelegten Knopf-Sicherheitsgurt (1) eines Fahrzeuginsassen, insbesondere Autofahrers, bei Nichtgebrauch des Kopf-Sicherheitsgurtes während der Fahrt,
**dadurch gekennzeichnet, daß**
eine in das obere Ende der Kopfstütze oder des Kopfteils der Rückenlehne ( 16 ) eingelassene Mulde ( 12 ) bestehend aus einem eckigen Fach ( 24 ) angeordnet ist, das einen Einrasterungsmechanismus aufweist, welcher aus einer oder mehreren federnden Klemmen oder einem oder mehreren Klemmenpaaren (21) am Stirnteil des Kopf-Sicherheitsgurtes (1) besteht oder bestehen, um diesen zu arretieren und eine Entnahme des Kopf-Sicherheitsgurtes (1) aus der Haltevorrichtung (17) aus der Nichtgebrauchsstellung mittels leichten Drucks der entnehmenden Hand auf eines der hervorstehenden Klemmen oder Klemmenpaare (21) erfolgt, wobei die Klemmenpaare (21) gekreuzt oder nicht gekreuzt angeordnet sind.

## Claims

1. Holding fixtures for a removed head safety belt (1) of a vehicle occupant, in particular of a car driver, when said head safety belt is not In use while driving,
**characterised in that**
a holding frame (3) with cross-sectionally hook-shaped support surface (8) is attached above the head end of the backrest (16) of the seat in such a manner that the retraction force of the belt retractor pulls the head safety belt (1) into said hook-shaped support surface (8), said head safety belt (1) being attached to the front section, wherein merely a gentle lifting movement of the head safety belt (1) against the retraction force of the belt retractor is required for withdrawing said head safety belt (1) out of the non-use position in the holding fixture.

2. Holding fixtures for a removed head safety belt (1) of a vehicle occupant, in particular of a car driver, when said head safety belt is not in use while driving,
**characterised in that**
there is provided a recess (12) with an engaging mechanism, said recess (12) being let into an upper end of the head restraint or of a head section of the backrest (16), wherein said engaging mechanism consists of a rectangular holding slot (17) to be provided at the front as viewed in the forward direction of travel, wherein the recess (12) consists of two or more single or pairwise or two or more pairwise arranged holding slots (17), said holding slots (17) being attached in crossed or multiply crossed or pairwise crossed manner, wherein the recess (12) comprises one or more mutually opposite spring-loaded counterpressure levers (18), wherein the head safety belt (1) is withdrawn out of the non-use position in the holding fixture (17) by means of slight backwards or sideways pressure on the attached head safety belt (1).

3. Holding fixtures for a removed head safety belt (1) of a vehicle occupant, in particular of a car driver, when said head safety belt is not in use while driving,
**characterised in that**
there is provided a recess (12), said recess (12) being let into the upper end of the head restraint or of the head section of the backrest (16), said recess consisting of a rectangular compartment (24), said compartment (24) comprising an engaging mechanism consisting of one or more spring-loaded clips or clip pairs (21) on the front section of the head safety belt (1) for the purpose of locking said head safety belt (1) in position, wherein the head safety belt (1) is withdrawn out of the non-use position in the holding fixture (17) by means of slight manual pressure on one of the protruding clips or clip pairs (21), said clip pairs (21) being arranged in crossed or non-crossed manner.

## Revendications

1. Dispositifs de fixation pour une ceinture de sécurité de tête (1) retirée pour un occupant de véhicule, en particulier le conducteur, en cas de non-utilisation de la ceinture de sécurité de tête pendant la marche,
**se caractérisant par le fait**
**qu'**un support de fixation (3) doté à la transversale d'une surface d'appui (8) en forme de crochet est monté au-dessus de l'extrémité tête du dossier (16) du siège de sorte que la force de retour de l'enrouleur de la ceinture fasse rentrer la ceinture de sécurité de tête (1) accroché sur la partie frontale dans la surface d'appui (8) en forme de crochet et qu'il suffise de faire un léger mouvement de soulèvement de la ceinture de sécurité de tête (1) dans le sens inverse de la force de retour de l'enrouleur de ceinture pour la retirer de la fixation en position de non-utilisation.

2. Dispositifs de fixation pour une ceinture de sécurité de tête (1) retirée pour un occupant de véhicule, en particulier le conducteur, en cas de non-utilisation de la ceinture de sécurité de tête pendant la marche,
**se caractérisant par le fait**
**qu'**un creux encastré (12) dans une extrémité supérieure de l'appui-tête ou d'une partie tête du dossier (16) est aménagé d'un mécanisme d'enclenchement, composé d'une fente de soutien carrée (17) à prévoir sur le devant dans le sens de la marche, le creux (12) se composant de plusieurs fentes de soutien (17) aménagées individuellement ou deux à deux ou de plusieurs aménagées deux à deux, qui sont disposées en croix ou plusieurs fois en croix ou en croix deux à deux, qui présente/nt un ou plusieurs leviers de contre-pression à ressort (18), respectivement opposés et le prélèvement de la ceinture de sécurité de tête (1) hors du dispositif de fixation (17) en position de non-utilisation se faisant vers l'arrière ou sur le côté au moyen d'une légère pression sur la ceinture de sécurité de tête (1) suspendue.

3. Dispositifs de fixation pour une ceinture de sécurité de tête (1) retirée pour un occupant de véhicule, en particulier le conducteur, en cas de non-utilisation de la ceinture de sécurité de tête pendant la marche,
**se caractérisant par le fait**
**qu'**un creux encastré (12) dans l'extrémité supérieure de l'appui-tête ou de la partie tête du dossier (16), composé d'un compartiment carré (24), est aménagé et présente un mécanisme d'enclenchement qui se compose d'une ou de plusieurs pinces à ressort ou d'une ou de plusieurs paires de pinces (21) sur la partie frontale de la ceinture de sécurité de tête (1) pour bloquer ce mécanisme et le prélèvement de la ceinture de sécurité de tête (1) hors du dispositif de fixation (17) en position de non-utilisation se faisant au moyen d'une légère pression de la main qui prélève sur l'une des pinces ou des paires de pinces (21) en saillie, les paires de pinces (21) étant disposées en croix ou non en croix.
